# EUROPÄISCHE PATENTSCHRIFT

(11) **EP 0 996 217 B1**
(45) Veröffentlichungstag und Bekanntmachung des Hinweises auf die Patenterteilung: **21.03.2007**
(21) Anmeldenummer: 99121217.6
(22) Anmeldetag: 23.10.1999
(51) Int. Cl.: H02K 29/03, H02K 21/22, H02K 1/16

(54) **Hochpolige elektrische Maschine mit reduzierten Rastkräften**
Multipole electric machine with reduced cogging
Machine électrique multipolaire à faible pulsation de couple

(30) Priorität: 23.10.1998 DE 19848909
(43) Veröffentlichungstag der Anmeldung: 26.04.2000
(73) Patentinhaber: Strothmann, Thomas, Dipl.-Ing., 49134 Wallenhorst (DE); Invacare Poirier S.A., 37230 Fondettes (FR)
(72) Erfinder: Strothmann, Thomas, Dipl.-Ing., 49134 Wallenhorst (DE); Invacare Poirier S.A., 37230 Fondettes (FR)
(74) Vertreter: Rehberg Hüppe + Partner

(56) Entgegenhaltungen:
- EP-A- 0 678 968
- WO-A-94/06192
- US-A- 4 315 171
- US-A- 4 424 463
- US-A- 5 006 745
- PATENT ABSTRACTS OF JAPAN vol. 016, no. 112 (E-1180), 19. März 1992 (1992-03-19) & JP 03 284148 A (FANUC LTD), 13. Dezember 1991 (1991-12-13)

## Beschreibung

Die Erfindung bezieht sich auf hochpolige elektrische Maschine mit den Merkmalen des Oberbegriffs des Anspruches 1.

Bei elektrischen Maschinen mit fremderregtem oder permanenterregtem Läufer weist der Läufer, der insbesondere ein Rotor ener elektrischen Rotationsmaschine sein kann, eine Reihe von voneinander getrennten Rotorpole auf, die wechselweise einen magnetischen Nordpol und darauf in der Läuferbewegungsrichtung folgend einen magnetischen Südpol ausbilden. Zwei aufeinander folgende Läuferpole, die einen magnetischen Nordpol und einen magnetischen Südpol und damit eine volle magnetische Periode ausbilden, werden hier auch als Läuferpolpaar bezeichnet.

Insbesondere, wenn die Anzahl der Statorpole je magnetischer Periode des Läufers, d. h. je Läuferpolpaar, eine ganze Zahl ist und sich unter jedem Läuferpolpaar eine vollständige, jeweils identische Statoranordnung befindet, treten sogenannte Rastkräfte an der elektrischen Maschine auf. Diese beruhen auf nicht linearen Variationen der durch die Läuferpole verursachten, an den Statorpolen ansetzenden Kräfte, die von der Summe der zwischen den Läuferpolen und den Statorpolen herrschenden magnetischen Felder abhängig sind. Durch die notwendigen und durch Streufluß in magnetischer Hinsicht ohnehin immer entstehenden Lücken zwischen den Läuferpolen liegen nicht-lineare Feldanteile vor, die letztlich zu den nicht-linearen Variationen der Kräfte führen. Durch die Bewegung des Läufers werden diese bei Betrachtung einer elektrischen Rotationsmaschine zunächst radialen Variationen der Kräfte dann auch in tangentiale Anteile und damit in die nachteiligen Rastkräfte umgesetzt, welche besonders im langsamen Leerlauf auffällig sind. Die Rastkräfte werden auch unter den Stichworten Eigenrastverhalten und Cogging geführt. Durch die stets gleichen Verhältnisse über die einzelnen magnetischen Perioden des Läufers addieren sich die hier beschriebenen Effekte zudem über die Gesamtlänge des Läufers. Ein unruhiger Lauf, die Notwendigkeit der Einhaltung von Mindestdrehzahlen, ungewünschte Geräuschentwicklungen, Vibrationen usw. sind die Folge.

Es ist bekannt, zur Reduzierung der Rastkräfte bei einer elektrischen Maschine eine spezielle geometrische Gestaltung der Statorpole und/oder Läuferpole und/oder ihrer Relativanordnung vorzunehmen. Ein solcher Ansatz ist in der DE 195 07 490 C2 beschrieben. Es stellt sich jedoch heraus, daß dieser Ansatz sehr kostenintensiv ist und in aller Regel den Wirkungsgrad der elektrischen Maschine negativ beeinflußt.

Aus der DE 41 33 723 A1 ist es für eine elektrische Dreiphasenmaschine bekannt, zwar in üblicher Weise einem Läuferpolpaar die ganze Zahl von drei Statorpolen zuzuordnen, allerdings sollen durch unterschiedliche Abstände der Läuferpole untereinander die Rastkräfte der einzelnen Statorpole zueinander versetzt werden, so daß es statt zu einer Addition zu einer Art Ausmittelung der Rastkräfte über den gesamten Läufer hinweg kommen soll. Hierbei erweist sich aber als nachteilig, daß die konkret beschriebene elektrische Dreiphasenmaschine nur in einem sehr begrenzten Bereich von Betriebsparametern einsetzbar ist. Desweiteren schließt die nicht-äquidistante Anordnung der Läuferpole den häufig in elektronisch kommutierten Maschinen bevorzugten Einsatz von sogenannten Hallelementen als Läufer-Pösitionsdetektor aus, weil die nicht-äquidistante Anordnung der Läuferpole einen großen Winkeljitter bei der Positionserkennung des Läuferfeldes verursacht.

Eine hochpolige elektrische Maschine mit einem Läufer und einem Stator, wobei der Läufer eine Läuferpolanordnung mit einer ganzen Zahl von Läuferpolpaaren aufweist, die in der Läuferbewegungsrichtung hintereinander angeordnet sind und jeweils einer magnetischen Periode entsprechen, und wobei der Stator eine Statorpolanordnung mit einer zur Reduzierung des Rastmoments der elektrischen Maschine von einer ganzen Zahl abweichenden Anzahl von Statorpolen je Läuferpolpaar der Läuferpolanordnung aufweist, ist aus der EP 0 291 219 A1 bekannt. Hier ist ein Unterschied zwischen der Gesamtzahl der Statorpole von der Gesamtzahl der Rotorpole von ± 1 vorgesehen..Auf diese Weise sollen die Rastkräfte über den gesamten Läufer hinweg ausgemittelt werden. Besonders im Fall hoher Polzahlen stellt sich jedoch heraus, daß die Ausmittlung der an den Polen ansetzenden Rastkräfte nicht mehr vollständig stattfindet, weil herstellungs- oder lastbedingte mechanische Verformungen des Läufers und/oder des Stators und/oder Störungen der Äquidistanz der Läuferpole und/oder eine Exzentrizität des Stators und/oder des Rotors bei elektrischen Rotationsmaschinen die Rastkräfte in einzelnen Bereichen des Läufers betonen, die so durch gegenläufige Rastkräfte in den anderen Bereichen des Läufers nicht mehr vollständig ausgeglichen werden. Insbesondere bei elektrischen Rotationsmaschinen führen Exzentrizitäten von Rotor und/oder Stator, ein Taumeln des Rotors und Positionierungsfehler der Permanentmagnete eines permanenterregten Rotors zu einer unerwünschten Ausprägung deutlicher Rastmomente. Hinzu kommt eine relativ starke Geräuschentwicklung, die auf die charakteristische Rastkräfteverteilung in der elektrischen Rotationsmaschine und eine von dieser angeregte Grundschwingung bezogen auf den gesamten Maschinenumkreis zurückgeht.

Eine weitere hochpolige elektrische Maschine mit einem Läufer und einem Stator, wobei der Läufer eine Läuferpolanordnung mit einer ganzen Zahl von Läuferpolpaaren aufweist, die in der Läuferbewegungsrichtung hintereinander angeordnet sind und jeweils einer magnetischen Periode entsprechen, und wobei der Stator eine Statorpolanordnung mit einer zur Reduzierung des Rastmoments der elektrischen Maschine von einer ganzen Zahl abweichenden Anzahl von Statorpolen je Läuferpolpaar der Läuferpolanordnung aufweist, ist aus der DE 195 11 434 A1 bekannt. Hier wird für die Anzahl der Statorpole je Läuferpolpaar gefordert, daß sie von einer ganzen Zahl abweicht. Von dieser Lehre sind auch Ausführungsformen einer elektrischen Maschine erfaßt, bei der die Gesamtanzahl der Läuferpole und die Gesamtanzahl der Statorpole stärker als ± 1 voneinander abweichen. Die dabei notwendige Bewicklung des Stators ist komplex und daher sowohl manuell als auch maschinell schwierig durchzuführen. Zudem können beispielsweise durch Exzentrizitäten von Rotor und/oder Stator einer elektrischen Rotationsmaschine und ähnliche Fehler die weiterhin vorhandene RastKräfte in Teilbereichen der elektrischen Maschine betont so werden, daß sie über die gesamte elektrische Maschine hinweg nicht mehr vollständig ausgemittelt werden, sondern ein deutliche Rastmomente ausprägen.

Aus der WO 94/06192 ist es bekannt, den Stator einer elektrischen Maschine unter Verwendung mehrerer identischer Statorsegmente aufzubauen. Dabei werden die Statorsegmente mit einer gemeinsamen, d. h. sich über die einzelnen Segmente hinwegerstreckenden Wicklung versehen. Dies kann geschehen, wenn sich die Statorsegmente noch in einer ebenen Anordnung nebeneinander befinden und noch nicht zu einem ringförmigen Stator zusammengefügt sind. Die WO 94/06192 befaßt sich nicht mit der Reduzierung der Rastkräfte der dort beschriebenen elektrischen Maschine. Die dortigen Statorsegmente werden bezüglich ihrer Bewicklung und damit bezüglich ihrer elektrischen und magnetischen Ausbildung nicht getrennt voneinander hergestellt.

Eine Maschine mit den Merkmalen des Oberbegriffs des Patentanspruchs 1 ist aus der US-A-5,006,745 bekannt. Die Statorpolanordnung der dort in Fig. 8 gezeigten elektrischen Maschine ist in zwei in elektrischer und magnetischer Sicht identisch aufgebaute, in der Läuferbewegungsrichtung aufeinander folgende Statorpolunteranordnungen aufgeteilt. Dabei ist die Lehre verwirklicht, P = 2 (3n±1) Läuferpole und N = 6 n Statorpole vorzusehen.

Aus der US-A-4,424,463 sind elektrische Maschinen bekannt, deren Statorpolanordnungen in Statorpolunteranordnungen unterteilt sind. Die höchste dabei auftretende Drehsymmetrie zwischen in elektrischer und magnetischer Hinsicht identisch aufgebauten Statorpolunteranordnungen ist zwei, und je Rotorpolpaar sind zwei Statorpole vorgesehen.

Elektrische Maschinen mit Statorpolunteranordnungen mit einer sowohl in elektrischer als auch in magnetischer Hinsicht maximalen Drehsymmetrie von zwei sind auch aus der US-A-4,315,171 bekannt. Lokal beträgt die Anzahl der Statorpole pro Rotorpolpaar hier ebenfalls zwei.

Der Erfindung liegt daher die Aufgabe zugrunde, eine elektrische Maschine der eingangs beschriebenen Art aufzuzeigen, die auch bei herstellungs- und/oder lastbedingt hervorgerufenen mechanischen Toleranzen keine nennenswerte Rastkräfteerhöhung aufweist. Dabei soll auch die Herstellbarkeit der elektrischen Maschine möglichst einfach gehalten werden.

Erfindungsgemäß wird diese Aufgabe durch eine hochpolige elektrische Maschine mit den Merkmalen des Patentanspruchs 1 gelöst.

Bei der neuen elektrischen Maschine wird die Reduktion der Rastkräfte nicht durch ihre Ausmittelung über die gesamte Baulänge des Läufers vorgenommen, die bei einer elektrischen Rotationsmaschine dem Umfang des Rotors und auch demjenigen des Stators entspricht. Vielmehr erfolgt die Ausmittelung der Rastkräfte zu einem verschwindenden oder zumindest stark reduzierten Rest im Bereich jeder Statorpolanordnung. Verglichen mit einer elektrischen Maschine aus dem Stand der Technik mit einer gleichen Anzahl von Statorpolen erfolgt die Reduzierung der Rastkräfte damit auch über eine geringere Anzahl von Statorpolen hinweg. Dabei besteht nicht die Gefahr, daß lokale Fehlanordnungen der Läuferpole, Verformungen des Läufers und/oder des Stators bzw. Exzentrizitäten zwischen dem Stator und dem Rotor bei einer elektrischen Rotationsmaschine einzelne Rastkräfte so stark betonen, daß sie zu nennenswerten resultierenden Rastkräften bezogen auf die gesamte elektrische Maschine führen. Vielmehr werden tendenziell die Rastkräfte bezogen auf eine ganze Statorpolunteranordnung betont, über die hinweg die Rastkräfte jedoch bereits intern ausgeglichen werden.

Für die Anzahl der Statorpolunteranordnungen in der Statorpolanordnung hat sich bei der neuen elektrischen Maschine herausgestellt, dass diese unter dem Gesichtspunkt einer gegenüber dem Stand der Technik erheblichen zusätzlichen effektiven Reduzierung der resultierenden Rastkräfte auch unter ungünstigen Herstellungs- bzw. Betriebsbedingungen mehr als zwei betragen muss.

Vorteilhafte Ausführungsformen der neuen elektrischen Maschine sind in den Unteransprüchen 2 bis 10 beschrieben.

Wenn der Stator aus mindestens zwei identischen, getrennt voneinander gefertigten Statorsegmenten zusammengesetzt ist, die jeweils eine Statorpolunteranordnung oder mehrere vollständige Statorpolunteranordnungen aufweisen, ist der Stator nicht nur in elektrischer und magnetischer Hinsicht in die Statorpolunteranordnungen aufgeteilt. Vielmehr ist der Stator mechanisch aus einzelnen Statorsegmenten aufgebaut und damit auch herstellbar. Dies bedeutet eine erhebliche Vereinfachung der Herstellung insbesondere großer und sehr hochpoliger elektrischer Maschinen.

Aus Symmetriegründen beim Aufbau der neuen elektrischen Maschine ist es vorteilhaft, wenn jedes Statorsegment eine Anzahl von Statorpolen aufweist, die gleich einem ganzzahligen Vielfachen einer Anzahl von Betriebsphasen der elektrischen Maschine ist. Wenn jedes Statorsegment genau eine Statorpolunteranordnung umfaßt, bedeutet dies, daß auch jede Statorpolunteranordnung eine Anzahl von Statorpolen aufweist, die gleich einem ganzzahligen Vielfachen der Anzahl der Betriebsphasen der elektrischen Maschine ist.

Ebenso wie der Stator kann bei der neuen Maschine auch der Läufer aus mindestens zwei identischen, getrennt voneinander gefertigten Läufersegmenten zusammengesetzt sein, die dann jeweils eine einer Statorpolunteranordnung oder mehreren vollständige Statorpolunteranordnungen entsprechende ganze Zahl von Läuferpolpaaren aufweisen.

Bei der Herstellung der Statorsegmente und ggf. auch der Läufersegmente kann auf die Verwendung vorgefertigter Spulen zurückgegriffen werden. Dies setzt die Ausbildung der Polköpfe in einer Form voraus, die das Aufstecken der Spulen ermöglicht. Der Einsatz von vorgefertigten Spulen mit Spulkörpern erhöht die mechanische Stabilität der Spulen und die Durchschlagfestigkeit der Wicklungen. Mit Hilfe vorgefertigter Spulen kann der Kupferfüllungsgrad bei den Stator- bzw. Läufersegmenten sehr hoch gehalten werden. Dies gilt ganz besonders für vorgefertigte Spulen ohne Spulenkörper.

Die Verschaltung der Statorpolunteranordnungen bzw. der Statorpolsegmente in Parallelschaltung oder Serienschaltung oder in Kombinationen hieraus ermöglicht es, die Anschlußwerte der neuen elektrischen Maschine in Bezug auf ihre Betriebsspannung und ihren Betriebsstrom, d. h. ihre Anschlußimpedanz, zu variieren, ohne daß ungünstige, d. h. außergewöhnlich dicke oder dünne Drähte für die Bewicklung der Maschine verwendet werden müßten.

Der Aufbau des Stators aus einzelnen identischen Statorsegmenten führt dazu, dass es unter den Segmenten keine Abweichung zwischen den jeweils zueinandergehörigen Phasen gibt. Dies ist z. B. direkte Voraussetzung für eine Parallelschaltung, aber auch für einen guten Wirkungsgrad der neuen elektrischen Maschine.

Um auch dem einfachen Aufbau des Stators Rechnung zu tragen, sollte die Anzahl der Statorpolunteranordnungen in der Statorpolanordnung zwischen 3 und 6 liegen.

Die Erfindung wird im Folgenden anhand von Ausführungsbeispielen näher erläutert und beschrieben. Dabei zeigt
- Fig. 1a: eine elektrische Rotationsmaschine gemäß EP 0 291 219 A1 unter Annahme eines Versatzes des Mittelpunkts von Stator und Rotor sowie einer bestimmten Rotorstellung,
- Fig. 1b: die Maschine gemäß Fig. 1a nach geringfügiger Verdrehung des Rotors,
- Fig. 2: eine erste Ausführungsform der neuen elektrischen Maschine als Rotationsmaschine und
- Fig. 3: eine zweite Ausführungsform der neuen elektrischen Maschine ebenfalls als Rotationsmaschine.

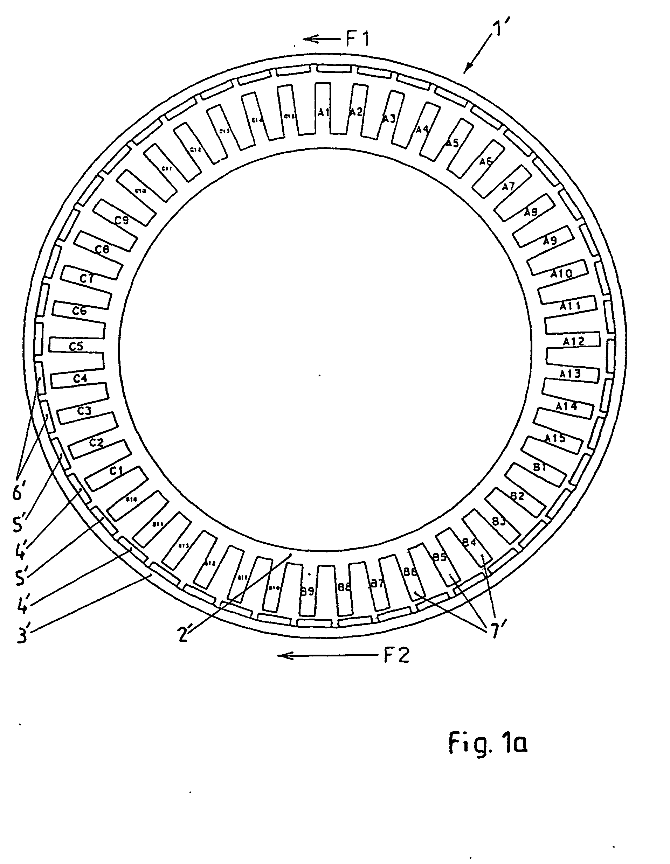

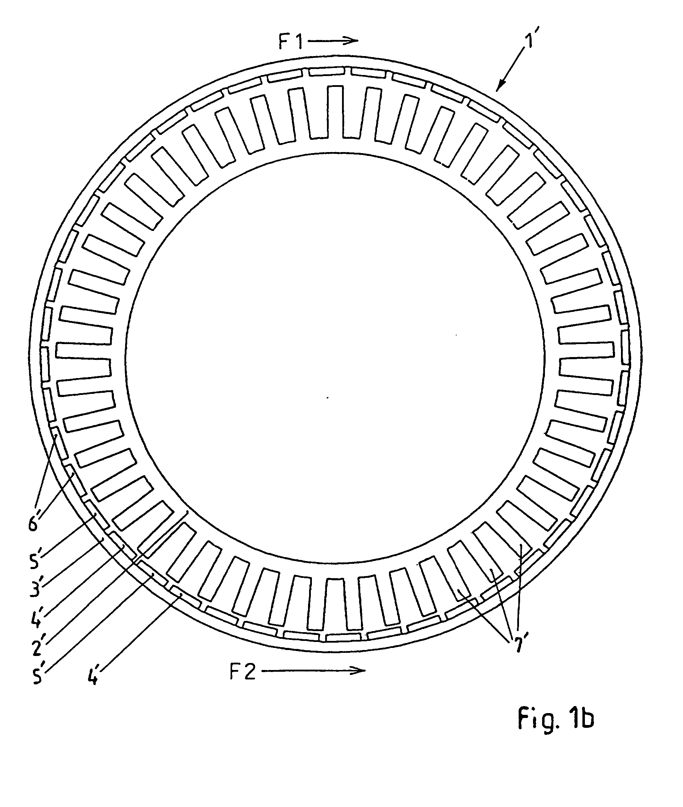

Die Fig. 1a und 1b zeigen eine elektrische Maschine 1', die als Rotationsmaschine ausgebildet ist. Die elektrische Maschine 1' weist einen inneren Stator 2' und einen äußeren Läufer 3' auf, der hier auch als Rotor bezeichnet werden kann. Der Läufer 3' ist mit Hilfe von Permanentmagneten 6' permanenterregt. Er weist dabei eine Läuferpolanordnung auf, bei der sich magnetische Südpole 4' und magnetische Nordpole 5' abwechseln, wobei jeweils ein Südpol 4' und ein Nordpol 5' ein Läuferpolpaar 4', 5' ausbilden, das einer ganzen magnetischen Periode entspricht. Der Stator 2' der elektrischen Maschine 1' ist darauf abgestimmt, daß es sich um eine dreiphasige elektrische Maschine für ein Drehstromnetz mit den Phasen U, V und W handelt. Entsprechend sind die Statorpole 7' mit Kennzeichnungen versehen, wie sie auch in der EP 0 291 219 A1 verwendet werden. Das heißt, die Statorpole 7' mit den Bezeichnungen A1, A3, A5 usw. entsprechen einer rechtsgewickelten Polspule an Phase U, d. h. elektrisch 0°, die Statorpole 7' mit den Bezeichnungen A2, A4, A6 usw. einer linksgewickelten bzw. Polspule an Phase U, d. h. elektrisch 180°, die Statorpole 7' mit den Bezeichnungen B1, B3, B5 usw. der rechtgewickelten Phase V, d. h. elektrisch 120°, die Statorpole 7' mit den Bezeichnungen B2, B4, B6 usw. der linksgewickelten Phase V, elektrisch 300°, die Statorpole 7' mit den Bezeichnungen C1, C3, C5 usw. der rechtsgewickelten Phase W, elektrisch 240°, und die Statorpole 7' mit den Bezeichnungen B2, B4, B6 usw. der linksgewickelten Phase W, d. h. elektrisch 60°. Ganz konkret entspricht die elektrische Maschine 1' dem Fall n = 7 gemäß der EP 0 291 219 A1, d. h. es gibt 3*(2n + 1) - 1 = 44 Läuferpole 4', 5' und 3*(2n + 1) = 45 Statorpole. Hierdurch werden Rastkräfte zwischen dem Läufer 3' und dem Stator 2' über den gesamten Umfang der elektrischen Maschine herausgemittelt, wenn die elektrische Maschine 1' eine ideale elektrische Maschine ist. Tatsächlich treten jedoch Verformungen des Stators 2' und des Läufers 3' sowie Exzentrizitäten auf. Dieser letzte Fall ist in den Fig. 1a und 1b in zwei Drehstellungen des Läufers 3' zum Stator 2' dargestellt. Durch die Exzentrizität zwischen dem Stator 2' und dem Läufer 3', durch den die Luftspalte im unteren Bereich der elektrischen Maschine 1' kleiner sind als in dem oberen Bereich, sind auch die Rastkräfte, die im unteren Bereich der elektrischen Maschine 1' anfallen, größer als diejenigen im oberen Bereich. Konkret ergibt sich in der Relativstellung des Läufers 3' zu dem Stator 2' gemäß Fig. 1a ein rechtsdrehendes Moment am Läufer 3', während in der Relativstellung gemäß Fig. 1b ein linksdrehendes Moment vorliegt. Hieraus resultiert unmittelbar ein unerwünschtes Rastmoment. Ein solches Rastmoment tritt bei größeren elektrischen Maschinen auch ohne eine Exzentrizität zwischen dem Läufer 3' und dem Stator 2' auf. Allein die unterschiedlichen Kräfte zwischen dem Stator 2' und dem Läufer 3' können zu einer umlaufenden elastischen Verformung der elektrischen Maschine 1' mit im Prinzip denselben Auswirkungen wie eine Exzentrizität führen. Dabei wirken die größten Kräfte zwischen dem Läufer und dem Stator immer dort, wo sich die am stärksten beströmten Wicklungen befinden, so daß tangentiale und radiale Kräfte auf den Stator und den Rotor wirken, die mit der Speisefrequenz, d. h. der Grundwelle der elektrischen Maschine umlaufen. Besonders beim Betrieb der elektrischen Maschine mit getakteten Umrichtern, die im hörbaren Frequenzbereich arbeiten, ist im Nebeneffekt auch noch eine relativ starke Geräuschemission feststellbar.

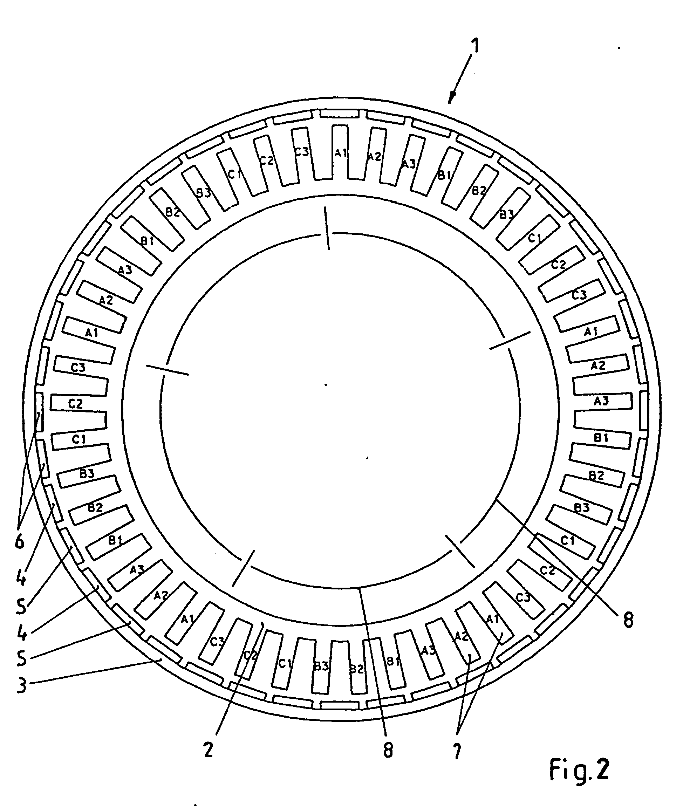

All diese Nachteile werden bei der neuen elektrischen Maschine vermieden, von der ein erstes Ausführungsbeispiel in Fig. 2 gezeigt ist. Hier weist die elektrische Maschine 1 eine Unterteilung der Statorpolanordnung in fünf identische Statorpolunteranordnungen 8 auf. Das heißt, der Stator 2 weist eine fünffache Drehsymmetrie bezüglich der elektrischen und magnetischen Ausbildung der Statorpole 7 auf. Die spezielle Ausbildung des Stators 2 entspricht dabei wieder einer dreiphasigen elektrischen Maschine 1. Die Kennzeichnung der einzelnen Statorpole 7 in Fig. 2 folgt dabei dem Muster von Fig. 1a, d. h. der Notation der EP 0 291 219 A1, wobei aber die dortige Regel betreffend die Anzahl der Läuferpolpaare 4, 5 und der Statorpole für jede der Statorpolunteranordnungen 8 mit n = 2 erfüllt ist. Demzufolge besteht der Stator 2 aus fünf gleichen Statorpolunteranordnungen 8 mit jeweils 3*(2n + 1) = 9 Statorpolen, d. h. insgesamt 45 Statorpolen. Der Läufer 3 besteht demgegenüber hier aus fünfmal 3*(2n + 1) - 1 = 8, also insgesamt 40 Läuferpolen. Die magnetischen und elektrischen sowie auch die Rastkraftverhältnisse sind innerhalb jeder Statorpolunteranordnung 8 gleich. Die Statorpole der einzelnen Statorpolunteranordnungen 8 mit einander zugehörigen Phasen können parallel, in Reihe und auch in Kombinationen hieraus verschaltet sein.

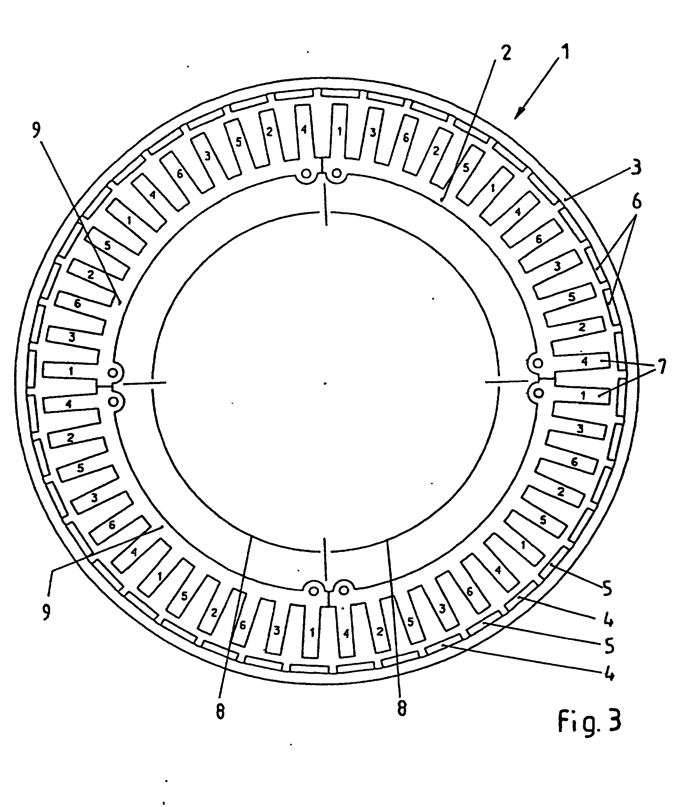

Fig. 3 zeigt eine elektrische Maschine 1 mit insgesamt 48 Statorpolen 7 und 20 Läuferpolpaaren 4, 5. Dabei weist die Statorpolanordnung der Statorpole 7 vier identische Statorpolunteranordnungen 8 auf. Der Aufbau jeder einzelnen Statorpolunteranordnung 8 bei der elektrischen Maschine 1 gemäß Fig. 3 entspricht der Anweisung der DE 195 11 434 für eine gesamte elektrische Maschine. Weiterhin unterscheidet sich die Ausführungsform gemäß Fig. 3 von derjenigen gemäß Fig. 2 dadurch, daß der Stator 2 nicht nur in Statorpolunteranordnungen 8, sondern auch in mechanische Statorsegmente 9 unterteilt ist. Jedes Statorsegment 9 weist einen identischen mechanischen, elektrischen und magnetischen Aufbau auf. Es ist daher getrennt von den anderen Statorsegmenten 9 herstellbar. Eine elektrische Verschaltung der einzelnen Polspulen der Statorsegmente 9 untereinander muß erst nach einem Zusammenbau des gesamten Stators 2 erfolgen.

### BEZUGSZEICHENLISTE

- 1 -: elektrische Maschine
- 2 -: Stator
- 3 -: Läufer
- 4 -: Südpol
- 5 -: Nordpol
- 4, 5 -: Läuferpolpaar
- 6 -: Permanentmagnet
- 7 -: Statorpol
- 8 -: Statorpolunteranordnung
- 9 -: Statorsegment

## Patentansprüche

1. Hochpolige elektrische Maschine (1) mit einem Läufer (3) und einem Stator (2), wobei der Läufer (3) eine Läuferpolanordnung mit einer ganzen Anzahl von Läuferpolpaaren (4, 5) aufweist, die in der Läuferbewegungsrichtung hintereinander angeordnet sind und jeweils einer magnetischen Periode entsprechen, wobei der Stator (2) eine Statorpolanordnung mit einer zur Reduzierung des Rastmoments der elektrischen Maschine (1) von einer ganzen Zahl abweichenden Anzahl von Statorpolen (7) je Läuferpolpaar (4, 5) der Läuferpolanordnung aufweist, wobei die Statorpolanordnung der elektrischen Maschine (1) aus mehreren in elektrischer und magnetischer Hinsicht identisch aufgebauten, in der Läuferbewegungsrichtung aufeinanderfolgenden Statorpolunteranordnung (8) zusammengesetzt sind, die jeweils einer ganzen Zahl von Läuferpolpaaren (4, 5) der Läuferpolanordnung zugeordnet sind und mehr als drei Statorpole (7) aufweisen, **dadurch gekennzeichnet, dass** die Statorpolanordnung mehr als zwei in elektrischer und magnetischer Hinsicht identisch aufgebaute Statorpolunteranordnungen (8) und der Stator (2) entsprechend eine mehr als zweifache Drehsymmetrie bezüglich der elektrischen und magnetischen Ausbildung der Statorpole (7) aufweist.

2. Elektrische Maschine nach Anspruch 1, **dadurch gekenn- zeichnet, dass** der Stator (2) aus mehr als zwei identischen, getrennt voneinander gefertigten Statorsegmenten (9) zusammengesetzt ist, die jeweils eine Statorpolunteranordnung (8) oder mehrere vollständige Statorpolunteranordnungen (8) aufweisen.

3. Elektrische Maschine nach Anspruch 2, **dadurch gekennzeichnet, dass** jedes Statorsegment (9) eine Anzahl von Statorpolen (7) aufweist, die gleich einem ganzzahligen Vielfachen einer Anzahl von Betriebsphasen der elektrischen Maschine (1) ist.

4. Elektrische Maschine nach einem der Ansprüche 1 bis 3, **dadurch gekennzeichnet, dass** der Läufer (3) aus mehr als zwei identischen, getrennt voneinander gefertigten Läufersegmenten zusammengesetzt ist, die jeweils eine einer Statorpolunteranordnung (8) oder mehreren vollständigen Statorpolunteranordnungen (8) entsprechende ganze Zahl von Läuferpolpaaren (4, 5) aufweisen.

5. Elektrische Maschine nach einem der Ansprüche 1 bis 4, **dadurch gekennzeichnet, dass** die Statorpole (7) unter Verwendung vorgefertigter Spulen ausgebildet sind.

6. Elektrische Maschine nach Anspruch 5, **dadurch gekennzeichnet, dass** die vorgefertigten Spulen Spulenkörper aufweisen.

7. Elektrische Maschine nach Anspruch 5, **dadurch gekennzeichnet, dass** die vorgefertigten Spulen keine Spulenkörper aufweisen.

8. Elektrische Maschine nach einem der Ansprüche 1 bis 7, **dadurch gekennzeichnet, dass** jede Statorpolunteranordnung (8) ein Wicklungssystem aufweist, wobei die Wicklungssysteme aller Statorunteranordnungen (8) durch Parallelschaltung zu einer Gesamtwicklung des Stators (2) verschaltet sind.

9. Elektrische Maschine nach einem der Ansprüche 1 bis 7, **dadurch gekennzeichnet, dass** jede Statorpolunteranordnung (8) ein Wicklungssystem aufweist, wobei die Wicklungssysteme aller Statorunteranordnungen (8) durch Serienschaltung zu einer Gesamtwicklung des Stators (2) verschaltet sind.

10. Elektrische Maschine nach einem der Ansprüche 1 bis 9, **dadurch gekennzeichnet, dass** die Statorpolanordnung drei bis sechs Statorpolunteranordnungen (8) aufweist.

## Claims

1. Multi pole electrical machine (1) having an armature (3) and a stator (2), the armature (3) having an armature pole arrangement comprising an integer number of armature pole pairs (4, 5) which follow each other in the direction of armature motion and which each correspond to one magnetic period, the stator (2) comprising a stator pole arrangement having a number of stator poles (7) per armature pole pair (4, 5) differing from an integer number for reducing the cogging forces in the electrical machine (1), the stator pole arrangement of the electrical machine (1) consisting of a plurality of stator pole sub-arrangements (8) which are identical with regard to both electrical and magnetic aspects, which follow each other in the direction of armature motion, and which are each associated to an integer number of armature pole pairs (4, 5) of the armature pole arrangement and comprise more than three stator poles (7), **characterized in that** the stator pole arrangement comprises more than two stator pole sub-arrangements (8) which are identical with regard to electrical and magnetic aspects and the stator (2) correspondingly comprises a more than two-fold rotation symmetry with regard to the electrical and magnetic formation of the stator poles (7).

2. Electrical machine according to claim 1, **characterized in that** the stator (2) is assembled from more than two identical, separately manufactured stator segments (9), each of which comprises a stator pole sub-arrangement (8) or a plurality of complete stator pole sub-arrangements (8).

3. Electrical machine according to claim 2, **characterized in that** each stator second (9) comprises a number of stator poles (7), which number is equal to an integer multitude of a number of operation phases of the electrical machine (1).

4. Electrical machine according to any of the claims 1 to 3, **characterized in that** the armature (3) is assembled from more than two identical, separately manufactured armature segments, which each comprise an integer number of armature pole pairs (4, 5) corresponding to one stator pole sub-arrangement (8) or a plurality of complete stator pole sub-arrangements (8).

5. Electrical machine according to any of the claims 1 to 4, **characterized in that** the stator poles (7) are made using pre-fabricated coils.

6. Electrical machine according to claim 5, **characterized in that** the pre-fabricated coils comprise coil formers.

7. Electrical machine according to claim 5, **characterized in that** the pre-fabricated coils do not comprise coil formers

8. Electrical machine according to any of the claims 1 to 7, **characterized in that** each stator pole sub arrangement (8) comprises a winding system, the winding systems of all stator sub-arrangements (8) being connected to form an overall winding of the stator (2) via parallel connection.

9. Electrical machine according to any of the claims 1 to 7, **characterized in that** each stator pole sub-arrangement (8) has a winding system, the winding systems of all stator pole sub-arrangements (8) being connected to form an overall winding of the stator (2) via serial connection.

10. Electrical machine according to any of the claims 1 to 9, **characterized in that** the stator pole arrangement comprises three to six stator pole sub-arrangements (8).

## Revendications

1. Machine électrique (1) multipolaire avec un rotor (3) et un stator (2), le rotor (3) comportant un système polaire avec un nombre entier de paires de pôles de rotor (4, 5), qui sont agencées les unes derrière les autres dans la direction de mouvement du rotor et correspondent chacune à une période magnétique, le stator (2) comportant un système polaire avec, pour chaque paire de pôles (4, 5) du système polaire du rotor, un nombre de pôles de stator (7) qui est différent d'un nombre entier pour diminuer le couple d'arrêt de la machine électrique (1), le système polaire du stator de la machine électrique (1) étant formé par plusieurs sous-systèmes polaires de stator (8) qui se succèdent dans la direction du mouvement du rotor et ont une structure identique sur le plan électrique et magnétique et qui sont associés chacun à un nombre entier de paires de pôles (4, 5) du système polaire du rotor et comportent plus de trois pôles de stator (7), **caractérisée en ce que** le système polaire du stator comporte plus de deux sous-systèmes polaires de stator (8), qui ont une structure identique sur le plan électrique et magnétique, et le stator (2), de manière correspondante, possède une symétrie de révolution plus que double en ce qui concerne la configuration électrique et magnétique des pôles de stator (7).

2. Machine électrique selon la revendication 1, **caractérisée en ce que** le stator (2) est formé par plus de deux segments (9) identiques, fabriqués séparément les uns des autres, qui comportent chacun un sous-système polaire de stator (8) ou plusieurs sous-systèmes polaires de stator (8) complets.

3. Machine électrique selon la revendication 2, **caractérisée en ce que** chaque segment de stator (9) comporte un nombre de pôles de stator (7) qui est égal à un multiple entier d'un nombre de phases de service de la machine électrique (1).

4. Machine électrique selon l'une quelconque des revendications 1 à 3, **caractérisée en ce que** le rotor (3) est formé par plus de deux segments identiques, fabriqués séparément les uns des autres, qui comportent chacun un nombre entier de paires de pôles de rotor (4, 5), correspondant à un sous-système polaire de stator (8) ou à plusieurs sous-systèmes polaires de stator (8) complets.

5. Machine électrique selon l'une quelconque des revendications 1 à 4, **caractérisée en ce que** les pôles de stator (7) sont réalisés moyennant l'utilisation de bobines préfabriquées.

6. Machine électrique selon la revendication 5, **caractérisée en ce que** les bobines préfabriquées ont des noyaux de bobine.

7. Machine électrique selon la revendication 5, **caractérisée en ce que** les bobines préfabriquées n'ont pas de noyaux de bobine.

8. Machine électrique selon l'une quelconque des revendications 1 à 7, **caractérisée en ce que** chaque sous-système polaire de stator (8) comporte un système de bobinage, les systèmes de bobinage de tous les sous-systèmes polaires de stator (8) étant montés selon un montage en parallèle par rapport à un enroulement global du stator (2).

9. Machine électrique selon l'une quelconque des revendications 1 à 7, **caractérisée en ce que** chaque sous-système polaire de stator (8) comporte un système de bobinage, les systèmes de bobinage de tous les sous-systèmes polaires de stator (8) étant câblés selon un montage en série par rapport à un enroulement global du stator (2).

10. Machine électrique selon l'une quelconque des revendications 1 à 9, **caractérisée en ce que** le système polaire de stator comporte trois à six sous-systèmes polaires de stator (8).
